# EUROPÄISCHE PATENTANMELDUNG

(11) **EP 2 296 190 A2**
(43) Veröffentlichungstag der Anmeldung: **16.03.2011**
(21) Anmeldenummer: 10176403.3
(22) Anmeldetag: 13.09.2010
(51) Int. Cl.: H01L 31/042, F24J 2/52

(54) **Anordnung, Unterkonstruktion und Photovoltaikanlage**

(30) Priorität: 15.09.2009 DE 102009041308
(71) Anmelder: REM GmbH, 84056 Rotterburg an der Laaber (DE)
(72) Erfinder: Hirsch, Thomas, 84028, Landshut (DE); Alt, Claus, 84028, Landshut (DE); Heinrich, Harald, 84076, Pfeffenhausen (DE)
(74) Vertreter: Epping - Hermann - Fischer

(57) **Zusammenfassung**

Eine Anordnung umfasst eine erste (110) und eine zweite (120) Vorrichtung zur Aufnahme je mindestens eines Photovoltaikmoduls (148; 149). Die erste Vorrichtung (110) ist an einem ersten Ende (111) mit einem ersten Ende (121) der zweiten Vorrichtung (120) gekoppelt, so dass ein dem ersten Ende (111) gegenüberliegendes zweites Ende (112) der ersten Vorrichtung (110) und ein dem ersten Ende (121) gegenüberliegendes zweites Ende (122) der zweiten Vorrichtung (120) beabstandet zueinander auf einer Fläche (101) angeordnet sind, die beabstandet von der Kopplung der ersten Enden (111; 121) ist. Eine Unterkonstruktion umfasst mehrere solcher Anordnung und eine Photovoltaikanlage mindestens zwei Photovoltaikmodule, die mit der Anordnung gekoppelt sind.

## Beschreibung

Die Erfindung betrifft eine Anordnung zur Aufnahme von Photovoltaikmodulen, eine Unterkonstruktion mit mindestens zwei solcher Anordnungen sowie eine Photovoltaikanlage.

Mit Hilfe von Photovoltaikmodulen kann die Energie der Sonnenstrahlung in elektrische Energie umgewandelt werden. Photovoltaikmodule werden üblicherweise auf einer Unterkonstruktion montiert, die wiederum auf einem Untergrund wie beispielsweise einem Dach befestigt ist. Auf Flachdächern oder bei sogenannten Freiflächenanlagen werden die Photovoltaikmodule herkömmlich auf Aufständerungsdreiecke montiert. Dabei wird je Aufständerungsdreieck ein einziges Photovoltaikmodul montiert. Diese Aufständerungsdreiecke müssen zusätzlich mit Gewichten beschwert werden oder mit dem Untergrund verschraubt werden, um die nötige Stabilität beispielsweise gegenüber Auftriebskräften bei Wind der Anlage zu gewährleisten. Entsprechend muss das Flachdach stabil genug sein das zusätzliche nicht unerhebliche Gewicht zu tragen beziehungsweise müssen Durchbohrungen durch die Dachhaut wieder verlässlich abgedichtet werden.

Es ist wünschenswert, eine Anordnung zur Aufnahme von Photovoltaikmodulen, eine Unterkonstruktion mit mindestens zwei solcher Anordnungen sowie eine Photovoltaikanlage anzugeben, um Photovoltaikmodule möglichst variabel zu montieren.

In einer Ausführungsform der der Erfindung umfasst eine Anordnung eine erste und eine zweite Vorrichtung zur Aufnahme je mindestens eines Photovoltaikmoduls. Die erste Vorrichtung ist an einem ersten Ende so mit einem ersten Ende der zweiten Vorrichtung gekoppelt, dass ein dem ersten Ende gegenüberliegendes zweites Ende der ersten Vorrichtung und ein dem ersten Ende gegenüberliegendes zweites Ende der zweiten Vorrichtung beabstandet zueinander auf einer Fläche angeordnet sind. Die Fläche ist beabstandet von der Kopplung der ersten Enden.

In einem Ausführungsbeispiel erstreckt sich jeweils ein Aufnahmebereich der ersten und der zweiten Vorrichtung für das jeweils mindestens eine Photovoltaikmodul von dem ersten Ende und zu dem zweiten Ende der ersten und der zweiten Vorrichtung.

Durch eine solche Kopplung der ersten und zweiten Vorrichtung kann die Anordnung zwei Photovoltaikmodule aufnehmen, die schräg zu der Fläche angeordnet sind.

In einem Ausführungsbeispiel umfasst die Anordnung mindestens ein Basiselement, das jeweils mit dem zweiten Ende der ersten Vorrichtung und dem zweiten Ende der zweiten Vorrichtung gekoppelt ist, so dass das mindestens eine Basiselement auf der Fläche angeordnet ist. Das Basiselement kann mindestens eine längliche Stange umfassen, die sich von dem zweiten Ende der ersten Vorrichtung zu dem zweiten Ende der zweiten Vorrichtung erstreckt.

Das Basiselement stabilisiert die Anordnung und verhindert möglichst, dass sich die zweiten Enden auf der Fläche relativ zueinander bewegen.

In einer Ausführungsform bilden die erste und die zweite Vorrichtung jeweils eine schräge Flanke zwischen dem ersten und dem zweiten Ende in Bezug auf das mindestens eine Basiselement aus, so dass die ersten Enden der ersten und der zweiten Vorrichtung zwischen dem zweiten Ende der ersten Vorrichtung und dem zweiten Ende der zweiten Vorrichtung angeordnet sind.

Durch die Anordnung der ersten Enden zwischen den zweiten Enden wird realisiert, dass wenn Photovoltaikmodule mit der Anordnung gekoppelt sind, die Haupteinstrahlflächen der Photovoltaikmodule voneinander weggerichtet sind. Zudem können die erste und die zweite Vorrichtung jeweils an der zweiten Seite mit dem mindestens einen Basiselement je einen Winkel von weniger als 90 Grad, insbesondere weniger als 20 Grad, einschließen. Insbesondere können die Vorrichtungen mit dem Basiselement einen Winkel von etwa 18 Grad einschließen, der sich aus dem niedrigsten Sonnenstand im Winter in Deutschland ergibt. An anderen Orten können andere Winkel eingeschlossen werden, die in Abhängigkeit des niedrigsten Sonnenstands bestimmt werden können. Der Winkel der ersten Vorrichtung und der Winkel der zweiten Vorrichtung können gleich groß sein, sie können auch verschieden sein.

In einer Ausführungsform umfassen die erste und die zweite Vorrichtung jeweils mindestens zwei längliche Stangen, die gleichgerichtet in einem Abstand zueinander angeordnet sind und sich jeweils von dem ersten Ende zu dem zweiten Ende erstrecken, und die eingerichtet sind zur Aufnahme jeweils des mindestens einen Photovoltaikmoduls.

In einer Ausführungsform umfasst die Anordnung eine Koppelvorrichtung zur Kopplung des ersten Endes der ersten Vorrichtung mit dem ersten Ende der zweiten Vorrichtung, wobei die Koppelvorrichtung ein erstes Element und ein zweiten Element. Die länglichen Stangen der ersten Vorrichtung und die länglichen Stangen der zweiten Vorrichtung greifen jeweils in entgegengesetzte Seiten des ersten Elements ein, um die erste Vorrichtung mit der zweiten Vorrichtung zu koppeln. Das zweite Element ist eingerichtet, so mit dem ersten Element gekoppelt zu werden, dass das jeweilige mindestens eine Photovoltaikmodul an dem jeweiligen ersten Ende durch die Koppelvorrichtung fixiert ist.

Durch die Koppelvorrichtung wird die Anordnung so stabilisiert, dass sich die länglichen Stangen der ersten und der zweiten Vorrichtung gegenseitig abstützen, so dass sie im Wesentlichen selbsttragend sind, ähnlich wie ein Bogen. Zudem können die zwei Photovoltaikmodule möglichst einfach mit dem selben Koppelelement mit der Vorrichtung gekoppelt werden. Dadurch werden weniger Montageschritte benötigt.

In einer Ausführungsform umfasst die Anordnung ein erstes und ein zweites Grundelement, die jeweils quer zu der Längsrichtung der länglichen Stangen beabstandet zueinander auf der Fläche angeordnet sind, wobei die zwei länglichen Stangen der ersten Vorrichtung an dem zweiten Ende der ersten Vorrichtung mit dem ersten Grundelement gekoppelt sind und die zwei länglichen Stangen der zweiten Vorrichtung an dem zweiten Ende der zweiten Vorrichtung mit dem zweiten Grundelement gekoppelt sind. Mit den Grundelementen kann die Anordnung auf die Fläche, beispielsweise eines aus einem Flachdach, einem flach geneigtes Dach und einer Freifläche, aufgestellt werden.

Die länglichen Stangen können jeweils zur Kopplung in die Grundelement einschiebbar sein. Die Grundelemente können jeweils eingerichtet sein, ein Befestigungselement zur Fixierung des jeweiligen mindestens einen Photovoltaikmoduls aufzunehmen. So können die Photovoltaikmodule an den zweiten Enden mit der Vorrichtung gekoppelt werden.

Die mindestens eine längliche Stange des Basiselements kann jeweils mit dem ersten Grundelement und mit dem zweiten Grundelement gekoppelt sein, um das erste Grundelement mit dem zweiten Grundelement zu koppeln. Dadurch kann weitestgehend verhindert werden, dass sich die Grundelemente relativ zueinander bewegen.

Die Anordnung umfasst in einer Ausführungsform mindestens zwei dreiecksförmige Seitenelemente, die jeweils an den Ecken der Dreiecksform miteinander gekoppelt sind, so dass drei Flächen eingeschlossen werden, so dass zwei Flächen eingerichtet sind jeweils mit dem mindestens einen Photovoltaikmodul gekoppelt zu werden und die dritte Fläche eingerichtet ist, auf der Fläche angeordnet zu werden.

Eine Unterkonstruktion für eine Photovoltaikanlage umfasst mindestens eine erste und eine zweite solche Anordnung. Die mindestens eine erste und eine zweite Anordnung sind miteinander gekoppelt.

Die mindestens eine erste und eine zweite Vorrichtung können so miteinander gekoppelt sein, dass die erste Vorrichtung quer zur Längsrichtung der Photovoltaikmodule neben der zweiten Vorrichtung angeordnet ist. Die mindestens eine erste und eine zweite Vorrichtung können so miteinander gekoppelt sein, dass die erste Vorrichtung in Richtung der Längsrichtung der Photovoltaikmodule neben der zweiten Vorrichtung angeordnet ist.

Eine Photovoltaikanlage umfasst mindestens eine solche Anordnung und mindestens das erste und das zweite Photovoltaikmodul, das jeweils mit der Anordnung gekoppelt ist, so dass die Haupteinstrahlfläche des ersten Photovoltaikmoduls verschieden zu der Haupteinstrahlfläche des zweiten Photovoltaikmoduls ausgerichtet ist.

Weitere Merkmale und Vorteile werden in Zusammenhang mit den Beispielen den Figuren 1 bis 10 beschrieben.

Es zeigt:
Figur 1 eine schematische Ansicht einer Anordnung gemäß einer Ausführungsform,
Figur 2 eine schematische Ansicht einer Unterkonstruktion gemäß einer Ausführungsform,
Figur 3 einer schematische Ansicht einer Photovoltiakanlage gemäß einer Ausführungsform,
Figur 4 eine schematische Detailansicht einer Koppelvorrichtung gemäß einer Ausführungsform,
Figur 5 eine schematische Detailansicht der Anordnung gemäß einer Ausführungsform,
Figur 6 eine schematische Ansicht eines Grundelements gemäß einer Ausführungsform,
Figur 7 eine schematische Schnittansicht einer länglichen Stange gemäß einer Ausführungsform,
Figur 8 eine schematische Ansicht einer Anordnung gemäß einer Ausführungsform,
Figur 9 eine schematische Ansicht einer Unterkonstruktion gemäß einer Ausführungsform,
Figur 10 eine schematische Detailansicht eines Ausschnitts einer Anordnung der Figur 8 gemäß einer Ausführungsform.

Gleiche, gleichartige und gleich wirkende Elemente sind in den Figuren mit gleichen Bezugszeichen versehen.

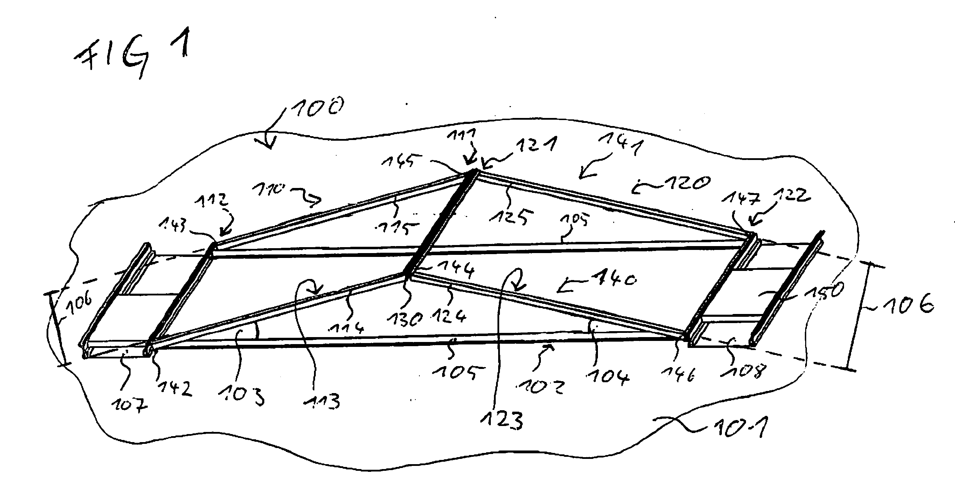

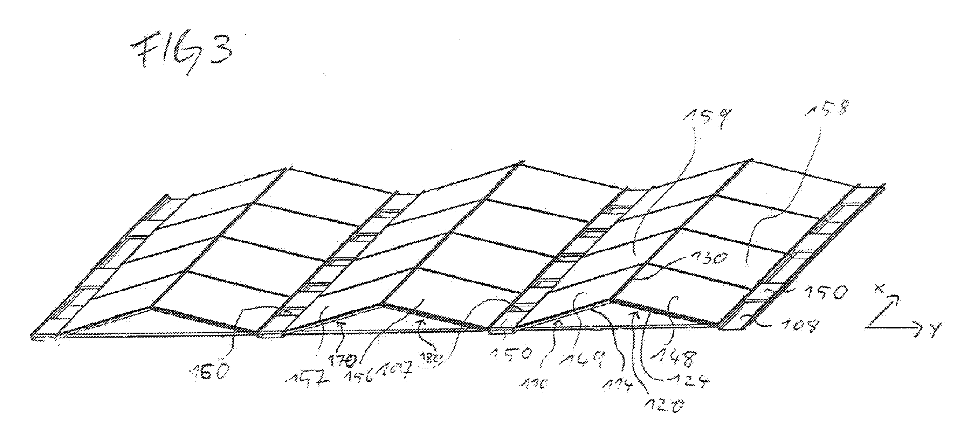

Figur 1 zeigt eine Anordnung 100 zur Aufnahme von zwei Photovoltaikmodulen 148, 149 (Figur 3). Die Anordnung 100 ist auf einer Fläche 101 angeordnet. Die Anordnung 100 umfasst zwei dreiecksförmige Seitenelemente 140 und 141. Die dreiecksförmige Seitenelemente 140 und 141 sind beabstandet zueinander so auf der Fläche angeordnet, dass eine Seite im Wesentlichen entlang der Fläche 101 verläuft, insbesondere im Wesentlichen parallel zu der Fläche 101. Die beiden Seitenelement 140 und 141 sind miteinander gekoppelt. Das erste Seitenelement 140 weist drei Ecken 142, 144 und 146 auf. Das erste Seitenelement 140 weist drei Ecken 143, 145 und 147 auf. Die beiden Seitenelement 140 und 141 sind jeweils an den korrespondierenden Ecken 142 und 143, 144 und 145 sowie 146 und 147 miteinander gekoppelt, so dass zwei Aufnahmebereiche 113 und 123 zur Aufnahme jeweils eines der Photovoltaikmodule 148 beziehungsweise 149 ausgebildet sind.

Die Aufnahmebereiche 113 und 123 sind jeweils schräg zu der Fläche 101 ausgerichtet. Wenn die Photovoltaikmodule 148, 149 auf der Anordnung 100 montiert sind (Figur 3), weisen die Photovoltaikmodule 148, 149 entsprechend eine Neigung in Bezug auf die Fläche 101 auf. Der Aufnahmebereich 113 schließt mit der Fläche in etwa den Winkel 103 ein. Der Aufnahmebereich 114 schließt mit der Fläche in etwa den Winkel 104 ein. Die Winkel 103 und 104, insbesondere jeweils der Betrag des Winkels, sind im Wesentlichen gleich groß. Die Winkel 103 und 104 können in einem weiteren Ausführungsbeispiel voneinander verschieden sein, beispielsweise können die Winkel 103 und 104 um 33% oder weniger voneinander abweichen, insbesondere 20% oder weniger. Die Winkel 103 und 104 um mehr als 33% voneinander abweichen, beispielsweise 40% oder mehr. Insbesondere sind die Winkel 103 und 104 jeweils spitze Winkel, also kleiner 90 Grad. Im gezeigten Ausführungsbeispiel ist der Winkel 103 ein positiver Winkel und der Winkel 104 ist ein negativer Winkel, so dass die Aufnahmebereiche 113 und 123 gegensätzlich schräg in Bezug auf die Fläche 101 ausgerichtet sind. Der Scheitel des Winkels 103 ist an den Ecken 142 und 143 angeordnet. Der Scheitel des Winkels 104 ist an den Ecken 146 und 147 angeordnet.

Die Anordnung 100 umfasst eine erste Vorrichtung 110, die den Aufnahmebereich 113 aufweist. Die Anordnung umfasst eine zweite Vorrichtung 120, die den Aufnahmebereich 123 aufweist. Die Vorrichtungen 110 und 120 sind schräg zu den Fläche 101 angeordnet. Die Vorrichtung 110 weist ein erstes Ende 111 auf, das an den Ecken 144 und 145 angeordnet ist. Die zweite Vorrichtung 120 weist ein erstes Ende 121 auf, das an den Ecken 144 und 145 angeordnet ist. Die Vorrichtung 110 weist ein zweites Ende 112 auf, das entgegengesetzt zu dem ersten Ende 111 an den Ecken 142 und 143 angeordnet ist. Die zweite Vorrichtung 120 weist ein zweites Ende 122 auf, das entgegengesetzt zu dem ersten Ende 121 an den Ecken 146 und 147 angeordnet ist. Die Vorrichtung 110 erstreckt sich zwischen dem ersten und zweiten Ende 111 und 112 und bildet so den Aufnahmebereich 113 aus. Die zweite Vorrichtung 120 erstreckt sich zwischen dem ersten und zweiten Ende 121 und 122 und bildet so den Aufnahmebereich 123 aus.

An den ersten Enden 111 und 121 sind die erste und die zweite Vorrichtung 110 und 120 miteinander durch eine Koppelvorrichtung 130 gekoppelt. An dem zweiten Ende 112 ist Vorrichtung 110 mit einem Grundelement 107 gekoppelt. An dem zweiten Ende 122 ist zweite Vorrichtung 120 mit einem Grundelement 108 gekoppelt. An dem zweiten Ende 112 ist Vorrichtung 110 weiterhin mit einem Basiselement 102 gekoppelt. An dem zweiten Ende 122 ist zweite Vorrichtung 120 mit dem Basiselement 102 gekoppelt. Das Grundelement 107 und das Grundelement 108 sind jeweils mit dem Basiselement 102 gekoppelt.

Die Vorrichtung 110 umfasst zwei längliche Stangen 114 und 115, deren Längsrichtung jeweils zwischen dem ersten Ende 111 und dem zweiten Ende 112 verläuft. Die länglichen Stangen 114 und 115 sind in einem Abstand 106 quer zur Längsrichtung angeordnet. Der Abstand 106 entspricht in etwa der Breite des Photovoltaikmoduls 149, das mit der Vorrichtung 110 gekoppelt werden soll. Die Vorrichtungen 110 und 120 sind eingerichtet, die Photovoltaikmodule 148 und 149 entweder hochkant oder quer aufzunehmen. Die längeren Seiten der Photovoltaikmodule können also entlang der länglichen Stangen 114 und 115 angeordnet werden oder die kürzeren Seiten der Photovoltaikmodule können entlang der länglichen Stangen 114 und 115 angeordnet werden.

Die zweite Vorrichtung 120, die im Wesentlichen baugleich mit der ersten Vorrichtung 110 ausgebildet ist, umfasst zwei längliche Stangen 124 und 125, deren Längsrichtung jeweils zwischen dem ersten Ende 121 und dem zweiten Ende 122 verläuft.

Beispielsweise ist bei einer vorgesehenen hochkant Montage der Photovoltaikmodule, wenn diese einer Breite von etwa 110 Zentimetern aufweisen, der Abstand 106 der jeweiligen Mitte der länglichen Stangen 114 und 115 beziehungsweise 124 und 125 etwa 110 Zentimeter plus/minus 2%. Der Abstand kann bei kleineren Modulen auch kleiner sein als 110 Zentimeter, beispielsweise 80 Zentimeter plus/minus 2%. Der Abstand kann bei größeren Modulen auch größer sein als 110 Zentimeter, beispielsweise 150 Zentimeter plus/minus 2%. Der Abstand 106 der jeweiligen Mitte der länglichen Stangen 114 entspricht in etwa der Breite der vorgesehenen Photovoltaikmodule.

Beispielsweise ist bei einer vorgesehenen quer Montage der Photovoltaikmodule, wenn diese einer Länge von etwa 160 Zentimetern aufweisen, der Abstand 106 der jeweiligen Mitte der länglichen Stangen 114 und 115 etwa 160 Zentimeter plus/minus 2%. Der Abstand kann bei kleineren Modulen auch kleiner sein als 130 Zentimeter, beispielsweise 130 Zentimeter plus/minus 2%. Der Abstand kann bei größeren Modulen auch größer sein als 160 Zentimeter, beispielsweise 200 Zentimeter plus/minus 2%. Der Abstand 106 der jeweiligen Mitte der länglichen Stangen 114 entspricht in etwa der Länge der vorgesehenen Photovoltaikmodule.

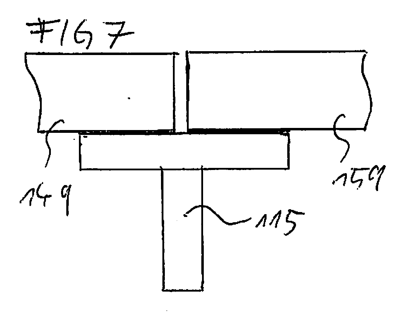

Die länglichen Stangen 114, 115, 124 und 125 weisen beispielsweise jeweils im Querschnitt die Form eines T-Profils auf, wie näher in Verbindung mit Figur 7 erläutert. Die länglichen Stangen 114, 115, 124 und 125 können auch eine andere Form aufweisen, die eingerichtet ist, mindestens ein Photovoltaikmodul zu tragen. Die länglichen Stangen 114, 115, 124 und 125 können Aluminium, verzinktes Stahl, oder ein anderes Material umfassen, dass stabil genug ist, Photovoltaikmodule über einen längeren Zeitraum von beispielsweise 20 Jahren verlässlich zu tragen, beispielsweise einen entsprechenden Kunststoff.

Das Basiselement 102 umfasst zwei längliche Stangen 105. Die länglichen Stangen 105 weisen beispielsweise jeweils im Querschnitt die Form eines T-Profils auf. Die länglichen Stangen 105 können auch eine andere Form aufweisen, die eingerichtet ist, wenn die länglichen Stangen 105 jeweils mit den Grundelementen 107 und 108 gekoppelt sind, zu verhindern, dass sich die Grundelemente 107 und 108 relativ zueinander bewegen. Die länglichen Stangen 105 können Aluminium, verzinktes Stahl, oder ein anderes Material umfassen, dass stabil genug ist, die Grundelemente 107 und 108 über einen längeren Zeitraum von beispielsweise 20 Jahren verlässlich zu koppeln, beispielsweise einen entsprechenden Kunststoff.

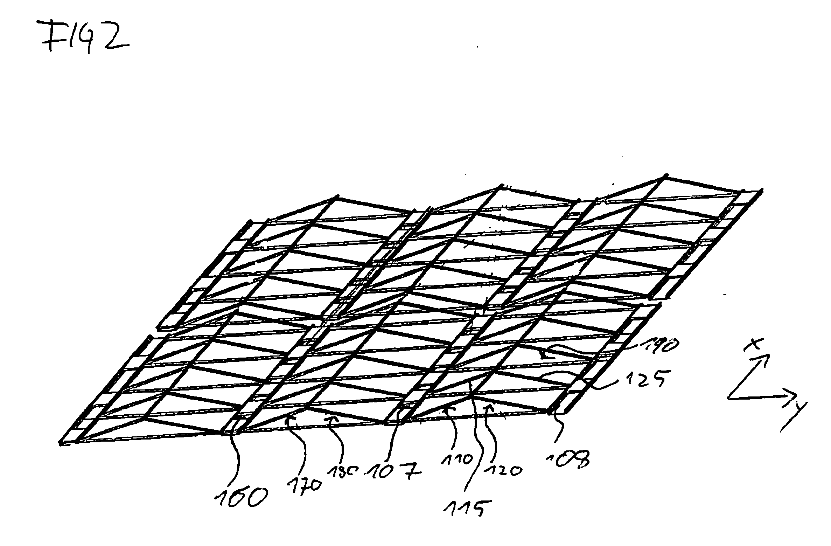

Die Grundelemente 107 und 108 sind jeweils eingerichtet, mit gegenüberliegenden Enden der länglichen Stangen 105 gekoppelt zu werden. Das Grundelement 107 ist eingerichtet, mit den länglichen Stangen 114 und 115 gekoppelt zu werden. Das Grundelement 108 ist eingerichtet, mit den länglichen Stangen 124 und 125 gekoppelt zu werden. Die Grundelemente 107 und 108 sind jeweils eingerichtet, mit weiteren nicht gezeigten länglichen Stangen gekoppelt zu werden, wie näher in Verbindung mit Figur 2 erläutert. Weiterhin sind Die Grundelemente 107 und 108 jeweils eingerichtet ein oder mehrere Beschwerungselemente 150 aufzunehmen. Mit Hilfe des Beschwerungselements 150 kann die Auflage der Anordnung 100 auf der Fläche 101 verbessert werden.

Die Fläche 101 umfasst ein Flachdach, ein flachgeneigtes Dach oder auch eine sogenannte Freifläche, also unabhängig von Bauwerken. Das flachgeneigte Dach ist beispielsweise etwa 10 Grad geneigt oder auch etwa 5 Grad. Insbesondere umfasst das Flachdach ein mit Folie abgedichtetes Dach, beispielsweise mit ein mit Ethylen-Propylen-Dien-Kautschuk Folie abgedichtetes Dach. Die Folie kann auch andere Materialen umfassen, beispielsweise weiteren Kautschuk oder Bitumen.

Durch die Kopplung der länglichen Stangen 114 und 124 sowie 115 und 125 mit dem Koppelelement 130 an den ersten Enden 111 und 121 und der Kopplung der länglichen Stangen 114 und 124 sowie 115 und 125 mit Grundelementen 107 und 108 sowie dem Basiselement 102 an den zweiten Enden 112 und 122 wird eine Aufständerung für zwei Photovoltaikmodule geschaffen. Die Aufnahmebereiche für die Photovoltaikmodule sind dabei jeweils schräg zum Untergrund angeordnet, da die länglichen Stangen der ersten Vorrichtung mit dem Basiselement den Winkel 103 einschließen und die länglichen Stangen der zweiten Vorrichtung mit dem Basiselement den Winkel 104 einschließen. Dadurch sind die Aufnahmebereiche in unterschiedliche Richtungen zueinander ausgerichtet. Die länglichen Stangen 114 und 124 sowie 115 und 125 sind dabei selbsttragend gekoppelt, so dass auf eine weiter Abstützung in Richtung der Fläche 101 verzichtet werden kann.

Figur 2 zeigt eine Unterkonstruktion umfassende eine Mehrzahl von Anordnungen 100, die eingerichtet ist 6 mal 8 Photovoltaikmodule aufzunehmen. Die Unterkonstruktion umfasst die Vorrichtungen 110 und 120 sowie weitere Vorrichtungen 170, 180 und 190. Die Vorrichtung sind jeweils ausgebildet wie in Verbindung mit den Vorrichtungen 110 und 120 erläutert.

In X-Richtung ist neben der Vorrichtung 120 die Vorrichtung 190 angeordnet. Die Vorrichtung 190 beziehungsweise die länglichen Stangen der Vorrichtung sind an einem zweiten Ende der Vorrichtung 190 mit dem Grundelement 108 gekoppelt, mit dem auch die Vorrichtung 120 gekoppelt ist. Die Vorrichtung 120 und die in X-Richtung neben der Vorrichtung 120 angeordneten Vorrichtungen, beispielweise die Vorrichtung 190, weisen das gemeinsame Grundelement 108 auf. Das Grundelement 108 erstreckt sich in X-Richtung über mehrere Vorrichtungen, beispielsweise vier Vorrichtungen. Das Grundelement kann sich auch über mehr Vorrichtungen, beispielsweise sechs oder mehr Vorrichtungen, oder weniger Vorrichtungen, beispielsweise 3 oder weniger Vorrichtungen, erstrecken.

Die unmittelbar aneinander angrenzenden Vorrichtungen 120 und 190 weisen eine gemeinsame längliche Stange 125 auf. Jeweils zwei direkt nebeneinander angeordnete Vorrichtungen weisen eine gemeinsame längliche Stange auf, durch die ein Aufnahmebereich für zwei Photovoltaikmodule ausgebildet ist. Von der länglichen Stange 125 wird ein Aufnahmebereich für ein Photovoltaikmodul ausgebildet, das auf der Vorrichtung 120 vorgesehen ist, und von der länglichen Stange 125 wird ein Aufnahmebereich für ein Photovoltaikmodul ausgebildet, das auf der Vorrichtung 190 vorgesehen ist. So werden in X-Richtung durch drei längliche Stangen die zwei Vorrichtungen 120 und 190 ausgebildet, die eingerichtet sind zwei Photovoltaikmodule aufzunehmen.

In negativer Y-Richtung sind neben der Vorrichtung 110 die Vorrichtungen 180 und 170 angeordnet. Die Vorrichtung 110 und die Vorrichtung 180 sind mit dem gemeinsamen Grundelement 107 gekoppelt. Auf der dem Grundelement 107 entgegengesetzten Seite ist die Vorrichtung 170 mit einem weiteren Grundelement 160 gekoppelt. Die Grundelemente 107, 108 und 160, die baugleich ausgebildet sind, sind jeweils eingerichtet auf zwei gegenüberliegenden Seiten des Grundelements jeweils mit einer oder mehreren Vorrichtungen gekoppelt zu werden. Durch diese modulare Unterkonstruktion kann mit einer begrenzten Anzahl verschiedener Bauelemente eine große Zahl unterschiedlicher Unterkonstruktionen realisiert werden.

Figur 3 zeigt eine Photovoltaikanlage, mit einem Teil einer Unterkonstruktion wie in Verbindung mit Figur 2 erläutert und drei mal acht Photovoltaikmodulen in drei Reihen, die mit der Unterkonstruktion gekoppelt sind. Das Photovoltaikmodul 148 ist mit der Vorrichtung 120 gekoppelt. Das Photovoltaikmodul 149 ist mit der Vorrichtung 120 gekoppelt. Ein Photovoltaikmodul 156 ist mit der Vorrichtung 180 gekoppelt. Ein Photovoltaikmodul 157 ist mit der Vorrichtung 170 gekoppelt. Ein Photovoltaikmodul 158 ist mit der Vorrichtung 190 gekoppelt. Die Photovoltaikmodule sind jeweils an dem ersten Ende durch die Koppelvorrichtung 130 mit der jeweiligen Vorrichtung gekoppelt. Es können eine, zwei oder mehrere Photovoltaikmodule durch die einzige gemeinsame Koppelvorrichtung 130 mit einer, zwei oder mehreren Vorrichtungen gekoppelt werden. Die Koppelvorrichtung erstreckt sich über eine entsprechende Anzahl an Photovoltaikmodulen.

Die Photovoltaikmodule liegen jeweils auf den länglichen Stangen der entsprechenden Vorrichtungen auf. Durch die länglichen Stangen werden die Module getragen und mechanisch stabilisiert. Jeweils zwei in X-Richtung direkt nebeneinander angrenzende Photovoltaikmodule liegen auf einer gemeinsamen länglichen Stange auf. Jeweils am äußeren Rand einer Reihe in X-Richtung beziehungsweise negativer X-Richtung liegt nur ein Photovoltaikmodul auf der länglichen Stange auf. Beispielsweise liegen das Photovoltaikmodul 158 und das Photovoltaikmodul 148 in der Mitte zwischen den beiden Photovoltaikmodulen gemeinsam auf der länglichen Stange 125 auf. Die längliche Stange 115 trägt das Photovoltaikmodul 149 und ein unmittelbar benachbart angeordnetes Photovoltaikmodul 159.

Die Photovoltaikmodule sind jeweils eingerichtet auf die Haupteinstrahlungsfläche eintreffende Strahlungsenergie, beispielsweise aus dem Sonnenlicht, in elektrische Energie umzuwandeln. Die Haupteinstrahlungsfläche ist die Fläche auf die in Betrieb ein Großteil des Sonnenlichts auftrifft. Die Haupteinstrahlungsfläche ist der Fläche 101 abgewandt. Die Photovoltaikmodule umfassen dazu Halbleiterstapel, beispielsweise aus Silizium oder Galium Arsenid. Auch andere Materialen sind zu einer entsprechenden Energieumwandlung geeignet, beispielsweise organische Solarzellen. Insbesondere werden Dünnschichtphotovoltaikmodule eingesetzt, bei denen der Halbleiterstapel auf ein Substrat abgeschieden ist. Diese Dünnschichtphotovoltaikmodule können rahmenlos, also ohne zusätzlichen verstärkenden Rahmen verwendet werden. Solche Photovoltaikmodule werden auch Dünnfilmphotovoltaikmodule genannt. Dünnschichtphotovoltaikmodule weisen im Vergleich zu herkömmlichen kristallinen Photovoltaikmodulen einen höheren Wirkungsgrad bei diffuser Strahlung auf.

Bei einer Photovoltaikanlage gemäß der Figur 3 werden bevorzugt Dünnschichtphotovoltaikmodule eingesetzt. Beispielsweise weißt die Y-Richtung in etwa in Südrichtung. Entsprechend sind die Photovoltaikmodule 149, 159 und 157 nach Norden gerichtet. Die Photovoltaikmodule 149, 159 und 157 wandeln dennoch effizient Strahlungsenergie in elektrische Energie um, da relativ viel diffuse Strahlung von den Dünnschichtphotovoltaikmodulen umgewandelt wird. Es ist auch eine von der Nord-Süd-Richtung abweichende Ausrichtung der Photovoltaikanlage effizient einsetzbar, beispielsweise in etwa eine Ost-West-Ausrichtung oder eine Ausrichtung dazwischen. Durch die beidseitige Bestückung der Anordnungen mit Photovoltaikmodulen wird die Effizienz der Photovoltaikanlage im Vergleich zu herkömmlichen Photovoltaikmodulen, bei denen nur die eine Seite mit Photovoltaikmodulen bestückt ist, erhöht. Dies wird durch den Einsatz von Dünnschichtphotovoltaikmodulen realisiert, die auch wenn ihre Haupteinstrahlfläche nach Norden gerichtet ist wirtschaftlich rentabel betreibbbar sind. Es können auch auf der einen Seite, die in etwa nach Süden gerichtet ist, kristalline Photovoltaikmodule eingesetzt werden und auf der entgegengesetzten Seite, die in etwa nach Norden gerichtet ist, Dünnschichtphotovoltaikmodule. Auch eine umgekehrte Anordnung ist möglich. In weiteren Ausführungsformen werden auf beiden Seiten kristalline Photovoltaikmodule eingesetzt.

Da bei der Photovoltaikanlage jeweils zwei rechteckige Photovoltaikmodule entgegengesetzt angeordnet sind, muss die Photovoltaikanlage insgesamt mit weniger Beschwerungselement 150 bestückt werden als bei herkömmlichen Photovoltaikanlagen. Herkömmliche Photovoltaikanlagen, bei denen je ein einziges Photovoltaikmodul auf einem Aufständerungsdreieck montiert ist, muss beschwert werden, da Wind hinter die Photovotaikmodule gelangen kann und daher Auftriebskräfte auf die Photovoltaikanlage wirken. Um diesen Kräften entgegenzuwirken werden herkömmliche Photovoltaikanlagen mit etwa 180 bis 200 Kilogramm pro Quadratmeter montierter Photovoltaikmodulfläche beschwert. Der Untergrund muss folglich ausgebildet sein, eine entsprechend große Last zu tragen. Dies ist insbesondere bei Flachdächern nicht immer gegeben.

Bei einer Photovoltaikanlage wie beispielsweise in Verbindung mit Figur 3 beschrieben reichen Beschwerungselement 150 mit in etwa 30 Kilogramm pro Quadratmeter montierter Photovoltaikmodulfläche aus, um die Photovoltaikanlage sicher auf dem Untergrund zu halten. Da weniger Wind unter die Photovoltaikmodule eindringen kann, als bei herkömmlichen Photovoltaikanalgen, kann die Beschwerung reduziert werden, vorzugsweise wird auf eine zusätzliche Beschwerung vollständig verzichtet. Zudem wirken bei den jeweils zwei entgegengesetzt ausgerichteten Photovoltaikmodulen, wenn diese Wind ausgesetzt sind, entgegengesetzte Kräfte, die sich zumindest teilweise aufheben. So bildet sich unter einem der Photovoltaikmodule ein Unterdruck aus, durch den die Photovoltaikanalge in Richtung der Fläche 101 gedrückt wird. Es kann daher ausreichend sein, die Photovoltaikanlage am Rand zu beschweren, also am Grundlement 108 und dem am entgegengesetzten Ende angeordneten Grundlement, während an den Grundelementen 107 und 160, die dazwischen angeordnet sind, kein oder nur eine geringere Beschwerung notwendig ist. Es kann zudem vermieden werden die Photovoltaikanlage über Verschraubungen mit dem Untergrund zu sichern beziehungsweise kann die Anzahl der Verschraubungen reduziert werden. Damit müssen bei Flachdächern keine oder nur wenige Durchbohrungen durch die Dachfolie wieder abgedichtet werden.

Die Winkel 103 und 104 sind jeweils so groß, dass auch beim tiefsten Sonnenstand am Standort der Photovoltaikanlage in Richtung der Sonnenstrahlung nachgelagerte Photovoltaikmodule nicht von vorgelagerten Photovoltaikmodulen verschattet werden. Ist die Sonnenstrahlung beispielsweise in etwa in Y-Richtung gerichtet, werden die Photovoltaikmodule 157 und 156 so schräg zur Fläche 101 aufgestellt, dass der Schatten der Photovoltaikmodule 157 und 156 auch beim tiefsten Sonnenstand nicht das Photovoltaikmodul 149 erreicht. Ist der tiefste Sonnenstand beispielsweise in etwa 18 Grad, so können die Photovoltaikmodule mit einem Winkel kleiner als 18 Grad zur Fläche 101 aufgeständert werden, beispielsweise in etwa 15 Grad. In einer Ausführungsform ist der Winkel größer in etwa 6 Grad, damit die Photovoltaikmodule einer Selbstreinigung, beispielsweise bei Regen, unterliegen. Durch eine solche Montage der Photovoltaikmodule kann die Photovoltaikanlage bei einer vorgegebenen Grundfläche insgesamt mit einer größeren Fläche an Photovoltaikmodulen bestückt werden als eine herkömmliche Photovoltaikanlage.

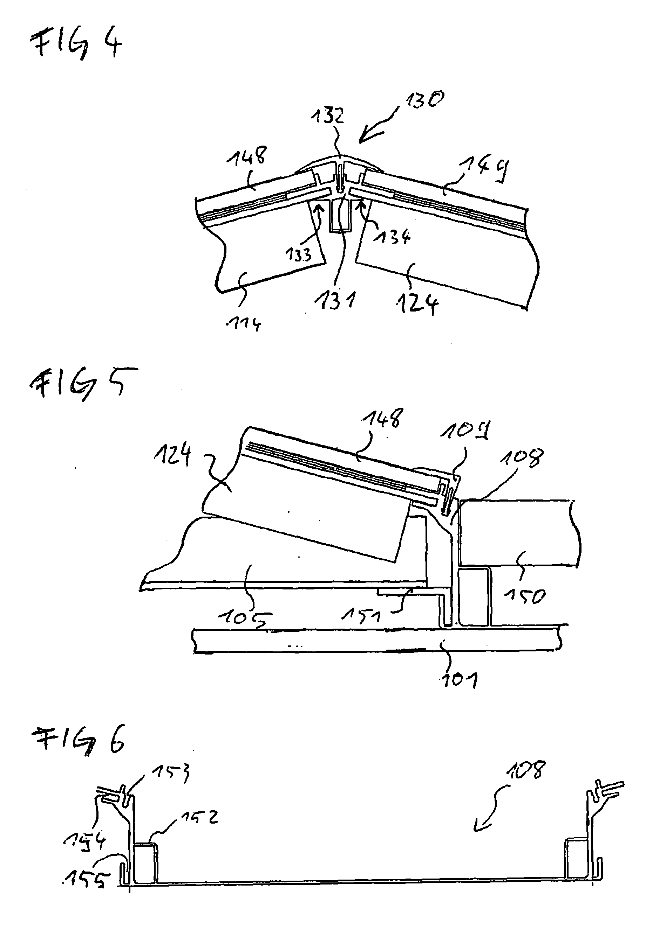

Figur 4 zeigt in einer Detailansicht der Photovoltaikanlage die Kopplung der länglichen Stangen 114 und 124 sowie der Photovoltaikmodule 148 und 149. Die längliche Stange 114 greift an einer ersten Seite 133 in die Koppelvorrichtung 130 beziehungsweise in ein erstes Element 131 der Koppelvorrichtung 130 ein. Die längliche Stange 124 greift an einer zweiten Seite 134, die der ersten Seite 133 gegenüberliegt, in die Koppelvorrichtung 130 beziehungsweise in ein erstes Element 131 der Koppelvorrichtung 130 ein. Insbesondere werden die länglichen Stangen 114 und 124 jeweils in Ausnehmungen des ersten Elements eingeschoben. So sind die länglichen Stangen 114 und 124 selbstragenden miteinander gekoppelt.

Bei der Montage der Photovoltaikanlage werden, wenn die länglichen Stangen 114 und 124 mit dem ersten Element 131 gekoppelt sind, die Photovoltaikmodule 148 und 149 auf die länglichen Stangen 114 beziehungsweise 124 aufgelegt. Zur Fixierung der Photovoltaikmodule 148 und 149 wird ein zweites Element 132 der Koppelvorrichtung 130 mit dem ersten Element gekoppelt. Das zweite Element 132 kann beispielsweise kraftschlüssig und/oder formschlüssig mit dem ersten Element gekoppelt werden, um die Photovoltaikmodule 148 und 149 an den ersten Enden 111 und 121 zu fixieren. Das zweite Element 132 kann dazu beispielsweise elastische Elemente aufweisen, die sich mit dem ersten Element 131 verhaken können. Das zweite Element 132 kann auch anders mit dem ersten Element gekoppelt werden, beispielsweise über einer Schraubverbindung.

Figur 5 zeigt in einer Detailansicht der Photovoltaikanlage die Kopplung der länglichen Stange 124, des Photovoltaikmoduls 148 sowie der länglichen Stange 105 mit dem Grundelement 108.

Die längliche Stange 124 greift in eine Ausnehmung 154 (Figur 6) des Grundelements 108 ein. Insbesondere ist die längliche Stange 124 in die Ausnehmung 154 des Grundelements eingeschoben. Das Photovoltaikmodul 148, das auf der länglichen Stange 124 aufliegt, wird an dem zweiten Ende 122 mit einem Befestigungselement 109 fixiert. Das Befestigungselement 109 ist mit dem Grundelement 108 an der Aufnahme 153 (Figur 6) gekoppelt. Das Befestigungselement 109 kann beispielsweise kraftschlüssig und/oder formschlüssig mit dem Grundelement 108 gekoppelt werden, um das Photovoltaikmodul 148 zu fixieren. Das Befestigungselement 109 kann dazu beispielsweise elastische Elemente aufweisen, die sich mit dem Grundelement 108 verhaken können. Das Befestigungselement 109 kann auch anders mit Grundelement 108 gekoppelt werden, beispielsweise über einer Schraubverbindung.

Die längliche Stange 105 ist zur Kopplung mit dem Grundelement 108 mit einem Winkelelement 151 gekoppelt. Das Winkelelement 151 ist mit dem Grundelement 108 gekoppelt, beispielsweise greift das Winkelelement in hinter einen vorspringenden Bereich 155 (Figur 6) des Grundelements. Insbesondere ist das Winkelelement 151 in das Grundelement eingeschoben.

Das Grundelement 108 liegt auf der Fläche 101 auf. Das Grundelement 108 berührt die Fläche 101. Auf einer Erhöhung 152 (Figur 6) der Grundelements 108 ist das Beschwerungselement 150 angeordnet, beispielsweise eine Betonplatte. Es können auch andere Beschwerungselemente verwendet werden, beispielsweise Kies, Sand und/oder weitere Materialen, die geeignet sind das Grundelement zu beschweren.

Figur 6 zeigt einen Querschnitt durch das Grundelement 108. Das Grundelement 108 ist symmetrisch ausgebildet, das dann an beiden Seiten vergleichbar eine der mehrere längliche Stangen gekoppelt werden können. Zur Kopplung mit den länglichen Stangen der Vorrichtungen weißt das Grundelement 108 die Ausnehmung 154 auf. Die Ausnehmung 154 ist eingerichtet, dass eine oder mehrere längliche Stangen in sie eingeschoben werden kann beziehungsweise können.

Das Basiselement 102 kann mit dem vorspringenden Bereich 155 des Grundelements 108 gekoppelt werden. Zudem weist das Grundelement 108 die Aufnahme 153 auf, mit der das Befestigungselement für die Photovoltaikmodule gekoppelt werden kann. Auf der Erhöhung 152 kann ein Beschwerungselement oder mehrere Beschwerungselemente angeordnet werden. Das Grundelement 108 ist eingerichtet zur Aufnahme beispielsweise elektrischer Leitungen, die zum Betrieb der Photovoltaikanlage nötig sind. Zudem kann das Grundelement 108 während der Montage oder zur Wartung der Photovoltaikanlage als Gehweg genutzt werden.

Figur 7 zeigt eine Schnittansicht der länglichen Stange 115 auf der das Photovoltaikmodul 149 und das Photovoltaikmodul 159 aufliegen. Die längliche Stange 115, die im Querschnitt die Form eines T-Profilsaufweist, ist eingerichtet, das Photovoltaikmodul 149 und das Photovoltaikmodul 159 aufzunehmen. Die längliche Stange ist so breit, dass die zwei Photovoltaikmodule 148 und 149 bereichsweise auf der länglichen Stange 115 aufliegen und von dieser getragen und mechanisch gestützt werden, beispielsweise um ein Durchbiegen der Photovoltaikmodule 148 und 149 zu vermeiden.

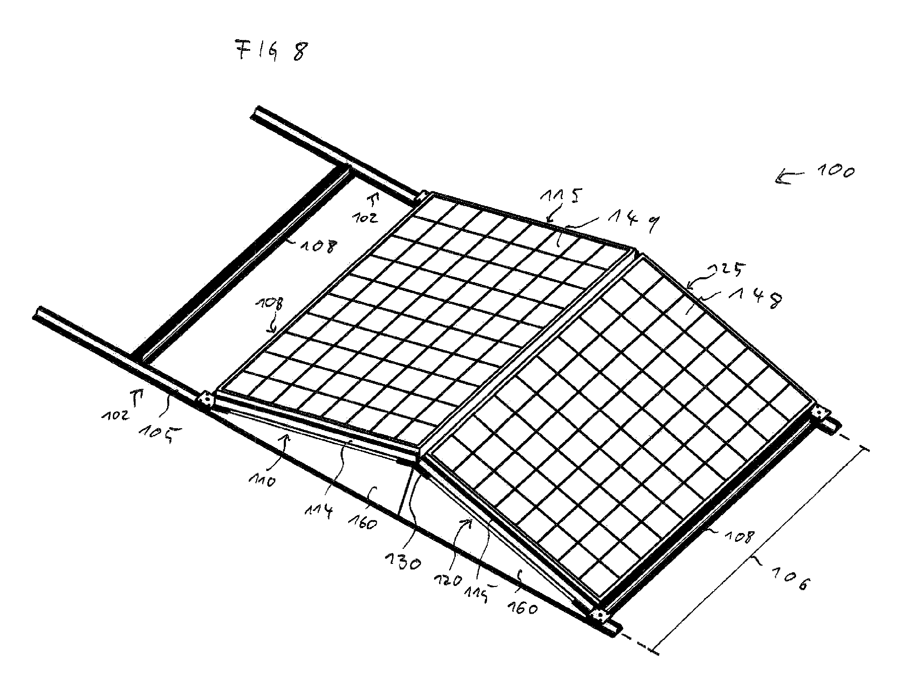

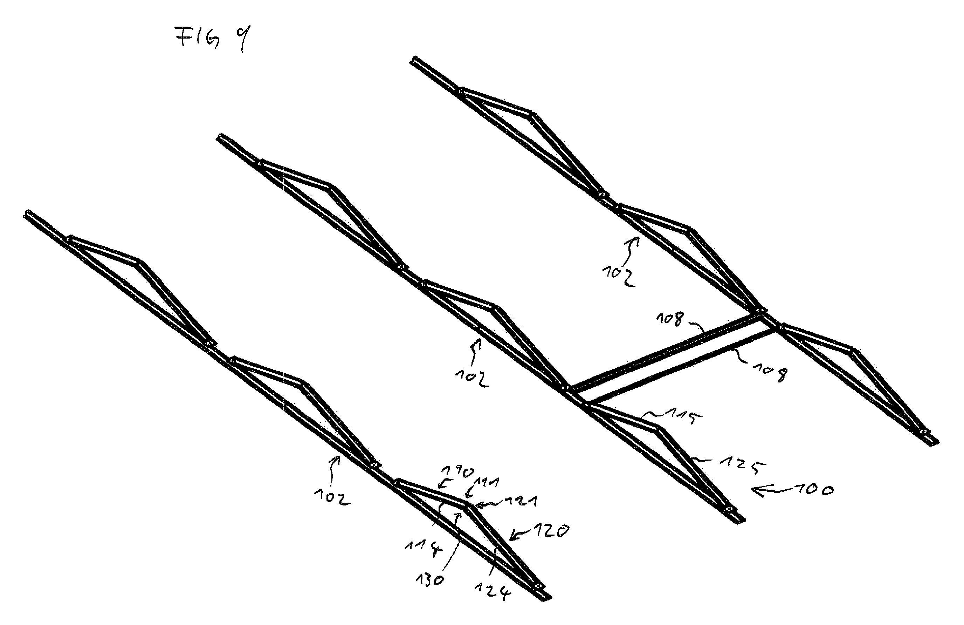

Figur 8 zeigt die Anordnung 100 gemäß weiteren Ausführungsformen. Im Unterschied zu den in Verbindung mit den Figuren 1 bis 7 geschilderten Ausführungsformen sind die länglichen Stangen 105, 114, 115, 124, 125 sowie die Grundelemente 108 der Anordnung 100 aus dem gleichen Typ, wie näher in Verbindung mit Figur 9 erläutert.

Das Basiselement 102 gemäß das Ausführungsformen der Figur 8 erstreckt sich durchgehend über mehr als eine Anordnung, insbesondere über eine Mehrzahl von Anordnung über eine Hauptrichtung der gesamten Unterkonstruktion, wie in Figur 9 gezeigt.

Zur Aufständerung der zwei Photovoltaikmodule 148 und 149 werden zwei Basiselemente 102 gleichgerichtet, vorzugsweise parallel, auf der Fläche 101, insbesondere dem Flachdach ausgelegt. Der Abstand 106 der Basiselemente 102 zueinander entspricht im Wesentlichen der Breite der Photovoltaikmodule 148, 149. Der Abstand 106 wird in Ausführungsformen durch die Grundelemente 108 fixiert. Die Grundelemente 108 markieren weiterhin in Ausführungsformen den Montagepunkt der Vorrichtungen 110 und 120 und dienen bei fertig montierter Photovoltaikanlage beispielsweise als Aufnahme elektrischer Leitungen, die zum Betrieb der Photovoltaikanlage nötig sind. Zudem können die Grundelemente 108 während der Montage oder zur Wartung der Photovoltaikanlage Gehwege eingrenzen. Insbesondere an den Außenseiten der Photovoltaikanlage sind in Ausführungsformen Abschlusselemente 160 zwischen dem Basiselement 102 und den länglichen Stangen 114, 124 angeordnet, die Auftriebskräfte, die bei Wind auf die Photovoltaikanlage wirken, weiter reduzieren. Die Photovoltaikmodule sind beispielsweise über Klemmen mit länglichen Stangen 114, 124 beziehungsweise 115, 125 gekoppelt. Beispielsweise sind die Klemmen mit den länglichen Stangen 114, 124 verschraubt und pressen einen Rahmen der Photovoltaikmodule gegen die länglichen Stangen. Bei rahmenlosen Photovoltaikmodulen werden zur Kopplung so genannte Randklemmen verwendet.

Sind in betriebsfertigem Zustand eine Mehrzahl von solcher Anordnungen mit Photovoltaikmodulen zu einer Unterkonstruktion und einer Photovoltaikanlage gekoppelt, ist es ausreichend diese Photovoltaikanlage ohne zusätzliche Befestigung auf ein Flachdach zu legen. Für einen zuverlässigen Betrieb ist dies ausreichend, da die Basiselemente 102 über die gesamte Länge der Mehrzahl der Anordnungen verlaufen und sich die Auftriebskräfte der zueinander gegensätzlich geneigten Photovoltaikmodule 148, 149 bei Wind gegenseitig verringern, vorzugsweise aufheben. Auf eine zusätzliche Beschwerung der Photovoltaikanlage wird insbesondere vollständig verzichtet.

Figur 9 zeigt eine exemplarische Unterkonstruktion mit Anordnungen 100 beziehungsweise Vorrichtungen 110, 120 gemäß den Ausführungsformen der Figur 8. Die Unterkonstruktion ist mit zwei mal sechs Photovoltaikmodulen koppelbar. Dazu sind drei Basiselemente 102 angeordnet, auf denen jeweils drei Teilvorrichtungen, die jeweils eine längliche Stange 114 und eine längliche Stange 124 umfassen, angeordnet sind. Die Teilvorrichtungen sind jeweils mit dem Basiselement gekoppelt, beispielsweise vernietet oder verschraubt. An der Spitze der Teilvorrichtungen, also an den Enden 111, 121, sind die länglichen Stangen miteinander gekoppelt, beispielsweise mit der Koppelvorrichtung 130 vernietet oder verschraubt. An den Enden 111, 121 sind die Teilvorrichtungen quer zu Längsrichtung der Basiselemente 102 und der länglichen Stangen 114, 124 nicht miteinander gekoppelt. Eine Abstützung der Vorrichtungen 100 quer zur Längsrichtung der Basiselemente 102 erfolgt in Betrieb über die gekoppelten Photovoltaikmodule. Auf den Teilvorrichtung, die in Figur 9 auf der mittleren der drei Basiselemente 102 gekoppelt sind (längliche Stangen 115, 125), liegen in Betrieb jeweils vier Photovoltaikmodule auf, vergleichbar zu den Ausführungsformen der Unterkonstruktion wie in Zusammenhang mit Figur 2 beschrieben. Die länglichen Stangen 115 beziehungsweise 125 sind eingerichtet, jeweils zwei Photovoltaikmodule zu tragen.

Die Basiselemente 102, die länglichen Stangen 114 und 124 sowie die Grundelemente 108 weisen im Querschnitt alle die gleiche Form auf, insbesondere eine T-Form und sind aus dem gleichen Profil.

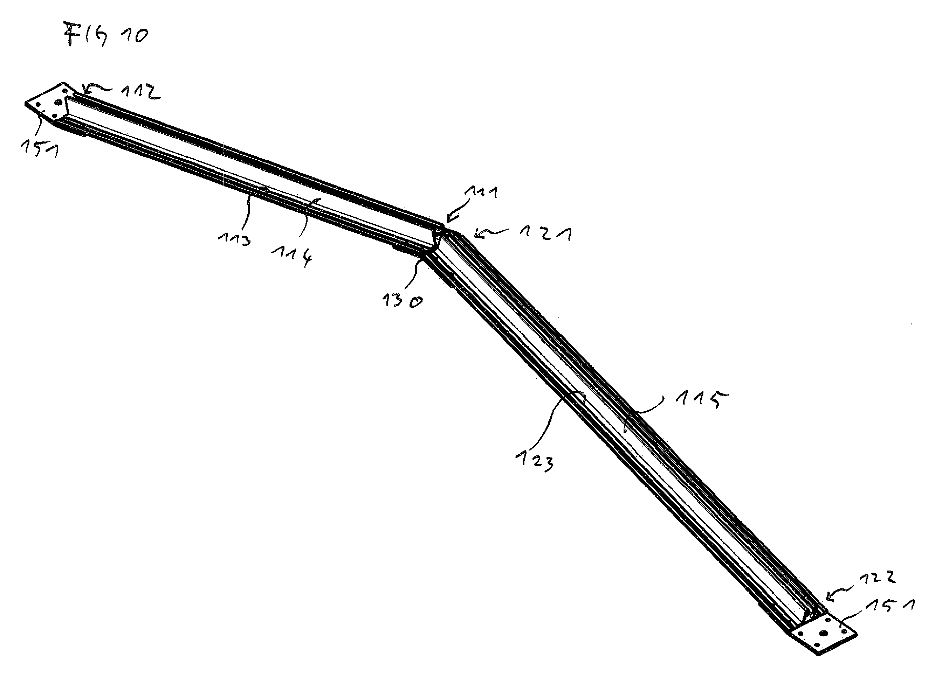

In Figur 10 ist die T-Form im Detail dargestellt. Dabei zeigt Figur 10 ein Teilvorrichtung, wie in Bezug auf Figur 9 beschrieben. Die beiden Photovoltaikmodule 148, 149 werden jeweils bei der Montage auf die zwei gleichgerichteten Schenkel des T-Profil aufgelegt, so dass der dritte Schenkel, der quer dazu gerichtet ist, zwischen den beiden Photovoltaikmodulen 148, 149 angeordnet ist. Der dritte Schenkel ist von der Fläche 101 abgewandt ausgerichtet. Die gleichgerichteten Schenkel bilden die Aufnahmebereiche 113 und 123 aus. Die länglichen Stangen 114 beziehungsweise 115 weisen jeweils zwei Aufnahmebereiche 113 beziehungsweise auf, die auf den beiden gegenüberliegenden Seiten des dritten Schenkels angeordnet sind.

An den Enden 112 beziehungsweise 122 ist jeweils ein Winkelelement 151 mit den länglichen Stangen 114 beziehungsweise 124 gekoppelt. Das Winkelelement 151 ist in Betrieb mit dem Basiselement 102 gekoppelt, wie in Figur 9 gezeigt. An den Enden 111 beziehungsweise 121 sind die länglichen Stangen 114, 124 jeweils mit dem Koppelelement 130 gekoppelt, das die länglichen Stangen 114, 124 miteinander koppelt.

In Ausführungsformen umfasst die Anordnung das erste 107 und das zweite 108 Grundelement, die jeweils quer zu der Längsrichtung der länglichen Stangen 114, 115; 124, 125 beabstandet zueinander auf der Fläche 101 angeordnet sind, wobei die zwei länglichen Stangen 114, 115 der ersten Vorrichtung 110 an dem zweiten Ende 112 der ersten Vorrichtung 110 mit dem ersten Grundelement 107 gekoppelt sind und die zwei länglichen Stangen 124, 125 der zweiten Vorrichtung 120 an dem zweiten Ende 122 der zweiten Vorrichtung 120 mit dem zweiten Grundelement 108 gekoppelt sind.

In Ausführungsformen sind bei der Anordnung die länglichen Stangen 114, 115; 124, 125 jeweils zur Kopplung in die Grundelement 107; 108 einschiebbar.

In Ausführungsformen sind bei der Anordnung die Grundelemente 107; 108 jeweils eingerichtet, ein Befestigungselement 109 zur Fixierung des jeweiligen mindestens einen Photovoltaikmoduls 148; 149 aufzunehmen.

In Ausführungsformen ist bei der Anordnung die mindestens eine längliche Stange 105 des Basiselements 102 jeweils mit dem ersten Grundelement 107 und mit dem zweiten Grundelement 108 gekoppelt ist, um das erste Grundelement 107 mit dem zweiten Grundelement 108 zu koppeln.

Die Erfindung ist anhand der Ausführungsbeispiele in der Beschreibung und in der Zeichnung lediglich exemplarisch dargestellt und nicht darauf beschränkt, sondern umfasst alle Variationen, Modifikationen, Substitutionen und Kombinationen, die der Fachmann den vorliegenden Unterlagen insbesondere im Rahmen des Anspruchs und der allgemeinen Darstellungen in der Einleitung dieser Beschreibung sowie der Beschreibung der Ausführungsbeispiele entnehmen kann. Beispielsweise kann die beschriebenen Anordnung beziehungsweise die Unterkonstruktion auch thermische Solarkollektoren aufnehmen, die Strahlungsenergie vorranging in Wärme umwandeln. Insbesondere sind alle einzelnen Merkmale und Ausgestaltungsmöglichkeiten der Erfindung und ihrer Ausführungsbeispiele kombinierbar.

## Patentansprüche

1. Anordnung, umfassend:
- eine erste (110) und eine zweite (120) Vorrichtung zur Aufnahme je mindestens eines Photovoltaikmoduls (148; 149), bei der die erste Vorrichtung (110) an einem ersten Ende (111) mit einem ersten Ende (121) der zweiten Vorrichtung (120) gekoppelt ist, so dass ein dem ersten Ende (111) gegenüberliegendes zweites Ende (112) der ersten Vorrichtung (110) und ein dem ersten Ende (121) gegenüberliegendes zweites Ende (122) der zweiten Vorrichtung (120) beabstandet zueinander auf einer Fläche (101) angeordnet sind, die beabstandet von der Kopplung der ersten Enden (111; 121) ist.

2. Anordnung nach Anspruch 1, bei der sich jeweils ein Aufnahmebereich (113; 123) der ersten (110) und der zweiten (120) Vorrichtung für das jeweils mindestens eine Photovoltaikmodul (148; 149) von dem ersten Ende (111; 121) und zu dem zweiten Ende (112; 122) der ersten (110) und der zweiten (120) Vorrichtung erstreckt.

3. Anordnung nach Anspruch 1 oder 2, umfassend:
- mindestens ein Basiselement (102), das jeweils mit dem zweiten Ende (112) der ersten Vorrichtung (110) und dem zweiten Ende (122) der zweiten Vorrichtung (120) gekoppelt ist, so dass das mindestens eine Basiselement (102) auf der Fläche (101) angeordnet ist.

4. Anordnung nach der Anspruch 3, wobei die erste (110) und die zweite (120) Vorrichtung jeweils eine schräge Flanke zwischen dem ersten (111; 121) und dem zweiten (112; 122) Ende in Bezug auf das mindestens eine Basiselement (102) ausbilden, so dass die ersten Enden (111; 121) der ersten (110) und der zweiten (120) Vorrichtung zwischen dem zweiten Ende (112) der ersten Vorrichtung (110) und dem zweiten Ende (122) der zweiten Vorrichtung (110) angeordnet sind.

5. Anordnung nach Anspruch 3 oder 4, bei der die erste (110) und die zweite Vorrichtung (120) jeweils an der zweiten Seite (112; 122) mit dem mindestens einen Basiselement (102) je einen Winkel (103; 104) von weniger als 90 Grad, insbesondere weniger als 20 Grad, einschließen.

6. Anordnung nach Anspruch 5, bei der der Winkel (103) der ersten Vorrichtung (110) und der Winkel (104) der zweiten Vorrichtung (120) gleich groß sind.

7. Anordnung nach Anspruch 5, bei der der Winkel (103) der ersten Vorrichtung (110) von dem Winkel (104) der zweiten Vorrichtung (120) verschieden ist.

8. Anordnung nach einem der Ansprüche 3 bis 7, bei dem das Basiselement (102) mindestens eine längliche Stange (105) umfasst, die sich von dem zweiten Ende (112) der ersten Vorrichtung (110) zu dem zweiten Ende (122) der zweiten Vorrichtung (120) erstreckt.

9. Anordnung nach einem der Ansprüche 1 bis 8, bei der die erste (110) und die zweite (120) Vorrichtung jeweils mindestens zwei längliche Stangen (114, 115; 124, 125) umfassen, die gleichgerichtet in einem Abstand (106) zueinander angeordnet sind und sich jeweils von dem ersten Ende (111; 121) zu dem zweiten (112; 122) Ende erstrecken, und die eingerichtet sind zur Aufnahme jeweils des mindestens einen Photovoltiakmoduls (148; 149).

10. Anordnung nach Anspruch 9, umfassend eine Koppelvorrichtung (130) zur Kopplung des ersten Endes (111) der ersten Vorrichtung (110) mit dem ersten Ende (121) der zweiten Vorrichtung (120), wobei die Koppelvorrichtung (130) ein erstes Element (131) und ein zweiten (132) Element aufweist, wobei die länglichen Stangen (114, 115) der ersten Vorrichtung (110) und die länglichen Stangen (124, 125) der zweiten Vorrichtung (120) jeweils in entgegengesetzte Seiten (133; 134) des ersten Elements (131) eingreifen, um die erste Vorrichtung (110) mit der zweiten Vorrichtung (120) zu koppeln, und das zweite Element (132) eingerichtet ist, so mit dem ersten Element (131) gekoppelt zu werden, dass das jeweilige mindestens eine Photovoltaikmodul (148; 149) an dem jeweiligen ersten Ende (111; 121) durch die Koppelvorrichtung (130) fixiert ist.

11. Anordnung nach einem der Ansprüche 1 bis 10, umfassend mindestens zwei dreiecksförmige Seitenelemente (140; 141), die jeweils an den Ecken (142, 143, 144, 145, 146, 147) der Dreiecksform miteinander gekoppelt sind, so dass drei Flächen eingeschlossen werden, so dass zwei Flächen eingerichtet sind jeweils mit dem mindestens einen Photovoltaikmodul (148; 149) gekoppelt zu werden und die dritte Fläche eingerichtet ist, auf der Fläche (103) angeordnet zu werden.

12. Unterkonstruktion für eine Photovoltaikanlage, umfassend:
- mindestens eine erste (150) und eine zweite (151) Anordnung nach einem der Ansprüche 1 bis 15, wobei die mindestens eine erste (150) und eine zweite (151) Anordnung miteinander gekoppelt sind.

13. Unterkonstruktion nach Anspruch 12, bei der die mindestens eine erste und eine zweite Vorrichtung miteinander gekoppelt sind, so dass die erste Vorrichtung quer zur Längsrichtung der Photovoltaikmodule neben der zweiten Vorrichtung angeordnet ist.

14. Unterkonstruktion nach Anspruch 12, bei der die mindestens eine erste und eine zweite Vorrichtung miteinander gekoppelt sind, so dass die erste Vorrichtung in Richtung der Längsrichtung der Photovoltaikmodule neben der zweiten Vorrichtung angeordnet ist.

15. Photovoltaikanlage, umfassend:
- mindestens eine Anordnung nach einem der Ansprüche 1 bis 11,
- mindestens das erste (148) und das zweite (149) Photovoltaikmodul, das jeweils mit der Anordnung gekoppelt ist, so dass die Haupteinstrahlfläche des ersten Photovoltaikmoduls verschieden zu der Haupteinstrahlfläche des zweiten Photovoltaikmoduls ausgerichtet ist.
